# EUROPEAN PATENT APPLICATION

(11) **EP 3 754 964 A1**
(43) Date of publication of application: **23.12.2020**
(21) Application number: 19181396.3
(22) Date of filing: 19.06.2019
(51) Int. Cl.: H04N 5/217, H04N 5/232, H04N 5/235, H04N 17/00

(54) **METHOD TO CONTROL OPERATION OF AN IMAGE SENSOR OF AN ADVANCED DRIVING ASSISTANCE SYSTEM PROVIDED IN A VEHICLE**

(71) Applicant: Visteon Global Technologies, Inc., Van Buren Township, MI 48111-5711 (US)
(72) Inventor: WILMER, Thorsten, 76646 Bruchsal (DE)
(74) Representative: MERH-IP Matias Erny Reichl Hoffmann Patentanwälte PartG mbB

(57) **Abstract**

A method for controlling operation of an image sensor of an Advanced Driving Assistance System (ADAS) provided in a vehicle using a first light source attached to said vehicle. The method comprises initiating, at least one time, by an electronic control unit (ECU), emission of light by the first light source for a predetermined duration within the field of view of the image sensor. The method further comprises determining, by the ECU, a detection result from the image sensor obtained in response to the light emitted by the first light source. The method further comprises determining, by the ECU, a status of the image sensor based on the detection result. The method further comprises executing, by the ECU, a preset task in response to the determined status. Further, a system for controlling operation of the image sensor of the ADAS is provided.

## Description

### TECHNICAL FIELD

One or more embodiments described herein relate to a method for controlling operation of an image sensor of an Advanced Driving Assistance System (ADAS) provided in a vehicle. In particular, a method for controlling operation of an image sensor using a first light source attached to said vehicle is described. Furthermore, one or more embodiments described herein relate to a system for controlling operation of an image sensor of an Advanced Driving Assistance System (ADAS) provided in a vehicle, the system comprising an image sensor, a first light source attached to said vehicle and an electronic control unit.

### BACKGROUND

On a vehicle, an Advanced Driving Assistance System (ADAS) is usually enabled and supported by a large number of sensors to monitor, in particular, a vehicle environment. This may be to obtain traffic related information, such as, for example, the speed or sudden stop of a preceding vehicle. Additionally or alternatively, this may be to obtain safety related information, such as pedestrians suddenly crossing a street, nearby the vehicle.

One group of sensors encompasses image sensors. In particular, cameras are widely used due their ability to provide real 3D information on a 2D scale which is easy to interpret either by the naked eye or by respective image recognition software. Types of cameras frequently used in this context may encompass front-facing perspective cameras or side-facing fisheye cameras. In the event that such cameras experience stuck images, offset images, delays in image gathering and/or processing, or in the event that such cameras unexpectedly go off-line, the functionality of the ADAS may be reduced. As such, the ADAS may operate with limited functionality or be shutdown completely until the underlying condition that caused the reduction is resolved.

### BRIEF SUMMARY OF THE INVENTION

One or more embodiments describe a method for controlling operation of an image sensor of an Advanced Driving Assistance System (ADAS) provided in a vehicle using a first light source attached to said vehicle.

According to an aspect, the method comprises a step of a) initiating, at least one time, by an electronic control unit (ECU), emission of light by the first light source for a predetermined duration within the field of view of the image sensor.

The ECU may be provided as a part of the ADAS. The ECU may be connected to the first light source by a wired and/or a wireless connection for initiating and controlling operation of the first light source. This may include controlling as to whether the first light source is working within predefined parameters prior to initiating light emission.

According to an aspect, the method further comprises a step of b) determining, by the ECU, a detection result from the image sensor obtained in response to the light emitted by the first light source.

The term detection result may be interpreted broadly. The term detection result may encompass any conceivable detection result by an image sensor depending on the type of image sensor used. For example, if the image sensor is as a camera, the detection result may be one or more pictures taken by said camera. For determining the detection result from the image sensor, the ECU may be connected to the image sensor by a wired and/or wireless connection. Through this connection, the ECU may further also control operation of the image sensor including initiation of the image sensor and calibration of the image sensor.

According to an aspect, the method further comprises a step of c) determining, by the ECU, a status of the image sensor based on the detection result.

Determining the status of the image sensor may be based on an analysis of the detection result. If the image sensor is a camera and the detection result is one or more pictures taken by the camera, image processing algorithms may be stored in the ECU that allow the ECU analyzing the one or more pictures with regard to parameters including one or more of brightness, sharpness, contrast, colour representation or image positioning. Analyzing the one or more pictures by the ECU may be performed on a pixel level.

According to an aspect, the method further comprises a step of d) executing, by the ECU, a preset task in response to the determined status.

According to an aspect, the preset task may include one or more of resuming operation of the image sensor, calibrating the image sensor and reporting on the image sensor being out of order.

According to an aspect, additionally, at least a second light source may be attached to the vehicle and the method may comprise a step of a) initiating, at least one time, by the ECU, emission of light by the first light source and by the at least second light source, successively or simultaneously, for a predetermined duration within the field of view of the image sensor.

According to an aspect, in a step a) of the method, the emission of light may be initiated, by the ECU, two or more times.

According to an aspect, the emission of light may be initiated, by the ECU, in a random pattern.

A random pattern may be created by randomly switching the first light source on and off, or if, additionally, at least a second light source is attached to vehicle, by switching the first and the at least second light source randomly on and off. In this, a delay of the image sensor may be determined.

According to an aspect, the image sensor may be a camera including one or more of a front-facing camera and a side-facing fisheye camera and in a step c) of the method the detection result may be one or more pictures taken by said camera.

According to an aspect, a system for controlling operation of an image sensor of an Advanced Driving Assistance System (ADAS) provided in a vehicle usinga first light source attached to said vehicle is provided, wherein the system comprises the first light source, the image sensor and an electronic control unit (ECU).

According to an aspect, the ECU is configured to perform a method comprising a step of a) initiating, at least one time, by the ECU, emission of light by the first light source for a predetermined duration within the field of view of the image sensor. The method further comprises a step of b) determining, by the ECU, a detection result from the image sensor obtained in response to the light emitted by the first light source. The method further comprises a step of c) determining, by the ECU, a status of the image sensor based on the detection result. And the method further comprises a step of d) executing, by the ECU, a preset task in response to the determined status.

The attachment of the first light source to the vehicle is not limited as long as the first light source is attached within the field of view of the image sensor.

According to an aspect, the first light source may be attached to a front end of the vehicle in the field of view of the image sensor and the image sensor may be a front-facing image sensor.

A front end of the vehicle may be, for example, an engine cover. If the vehicle comprises an iconic brand item, including, for example, one or more of a Daimler star, a Chinese star or a Jaguar, the first light source may be attached to said iconic brand item.

According to an aspect, the first light source may be attached to a side of the vehicle in the field of view of the image sensor and the image sensor may be a side-facing image sensor.

A side of the vehicle may be, for example, a ceiling of a side window or a door of the vehicle.

According to an aspect, the system may additionally comprise at least a second light source.

According to an aspect, the at least second light source may be attached to the front end of the vehicle at a position different from the first light source in the field of view of the image sensor and the image sensor is a front-facing image sensor.

According to an aspect, the at least second light source may be attached to the side of the vehicle at a position different from the first light source in the field of view of the image sensor and the image sensor may be a side-facing image sensor.

According to an aspect, the first light source and the at least second light source may be attached to the vehicle in a predetermined geometry.

A predetermined geometry may be realized, for example, by the first light source, the at least second light source and the image sensor forming by their respective positions a known geometric outline which may be stored in the ECU. Based on the predetermined geometry edge detection of the image sensor may be controlled.

According to an aspect, the first light source and/or the at least second light source may be an LED light source or a laser light source.

According to an aspect, the image sensor may be a camera including one or more of a front-facing camera and a side-facing fisheye camera.

### BRIEF DESCRIPTION OF THE DRAWINGS

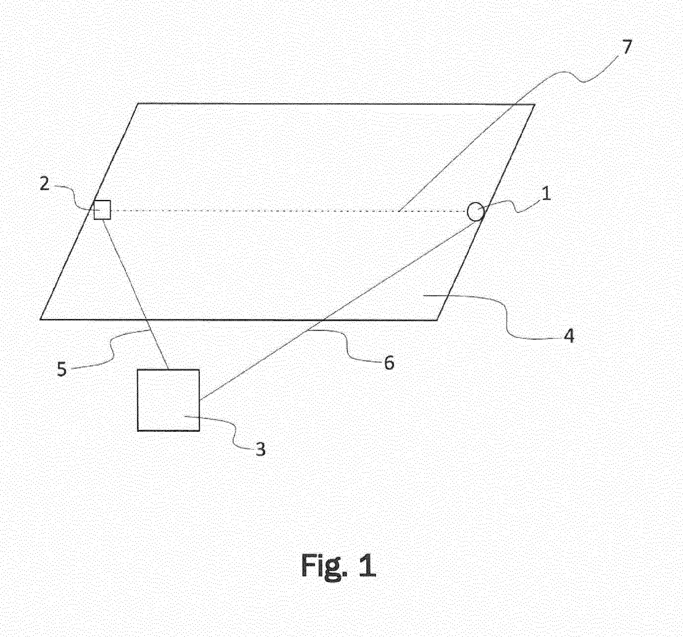

Fig. 1 is a schematic view of a system for controlling operation of an image sensor of an Advanced Driving Assistance System (ADAS) provided in a vehicle using a first light source attached to said vehicle, the system comprising a first light source, an image sensor and an electronic control unit (ECU) according to an embodiment.

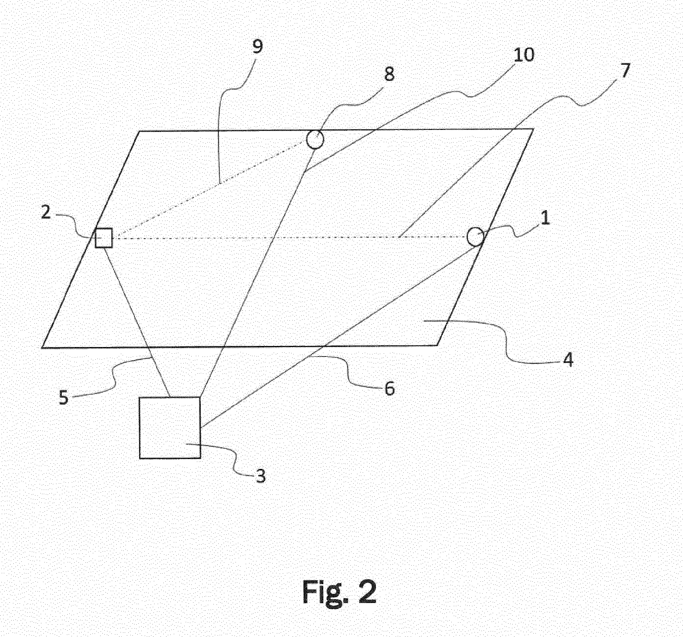

Fig. 2 is a schematic view a system for controlling operation of an image sensor of an Advanced Driving Assistance System (ADAS) provided in a vehicle using a first light source attached to said vehicle, the system comprising a first light source, a second light source, an image sensor and an electronic control unit (ECU) according to an embodiment.

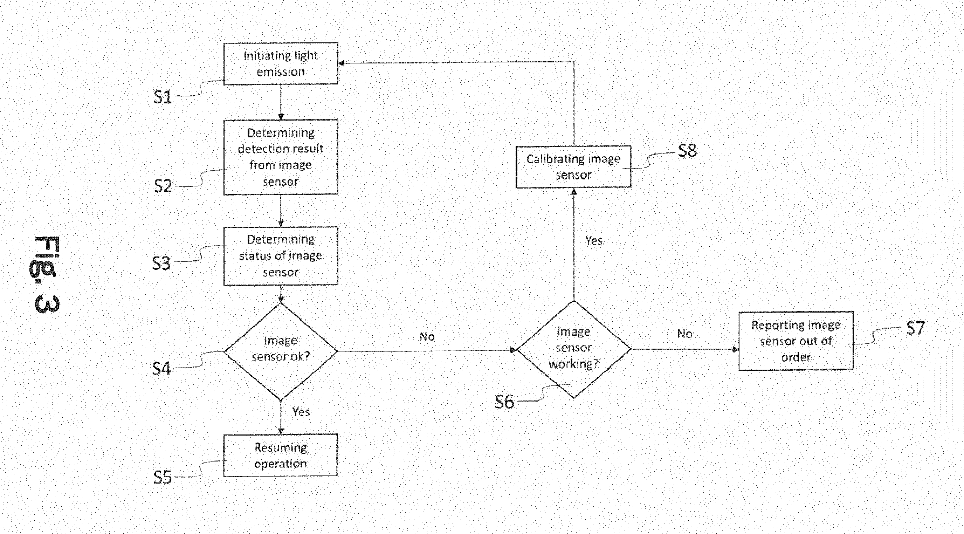

Fig. 3 shows a process flow schematically illustrating a method for controlling operation of an image sensor of an Advanced Driving Assistance System (ADAS) provided in a vehicle usinga first light source attached to said vehicle accordingto an embodiment.

### DETAILED DESCRIPTION OF THE INVENTION

Fig. 1 illustrates a schematic view of a front end 4 of a vehicle provided with an Advanced Driving Assistance System (ADAS) including a first light source 1, an image sensor 2 and an electronic control unit (ECU) 3 according to an embodiment. The image sensor 2 and the first light source 1 are connected to the ECU 3. The connections 5, 6 may be wired and/or wireless. The connections between the ECU 3 and the image sensor 2 and the first light source 1 allow the ECU 3 to initiate and control operation of the first light source 1, for example, to switch the first light source 1 on and off and to control as to whether the first light source 1 is working within predefined parameters, and to initiate and control operation of the image sensor 2, for example, to initialize detection by the image sensor 2 and to determine a detection result from the image sensor 2. The connection between the ECU 3 and the image sensor 2 further allows the ECU 3 to execute a preset task in response to a status of the image sensor 2 determined, by the ECU 3, based on the detection result from the image sensor 2.

In the embodiment of Fig.1, while the type of the image sensor 2 is not limited, the image sensor 2 may be realized as a camera, in particular, a front-facing camera. The positioning of the front-facing camera 2 on the vehicle is not limited. The front-facing camera 2 may be positioned at the front end 4 of the vehicle, for example, on an engine cover as shown in Figure 1, or behind the windshield of the vehicle on the dash. The front-facing camera 2 may be positioned with the field of view directed to the front of the vehicle to allow, for example, detecting traffic and/or pedestrians crossing a street in front.

In an embodiment, the image sensor 2 may also be realized as a side-facing fisheye camera. The positioning of the side-facing fisheye camera on the vehicle is not limited. The fisheye camera may be positioned at a side of the vehicle, for example, on a door or at the ceiling of a side window, with the field of view directed to a side view of the vehicle to allow detecting the environment at the side of the vehicle.

The first light source 1 is attached to the vehicle. In general, the positioning of the first light source 1 on the vehicle may thus only be limited by the area defined by the field of view of the image sensor 2 as projected onto the vehicle.

Referring to the embodiment of Fig. 1, the first light source 1 may be positioned opposite the front-facing camera 2 at the front end 4 of the vehicle. In an embodiment, the first light source 1 may be attached to the engine cover. In an embodiment, the vehicle may comprise an iconic brand item including one or more of a Daimler star, a Chinese star or a Jaguar and the first light source 1 may be attached to the iconic brand item. In this, the height of the first light source 1 with regard to the image sensor 2 may be easily adjusted.

The type of the first light source 1 is not limited. In an embodiment, the first light source 1 may be an LED light source or a laser light source. The LED light source may be of any type or colour. For example, the LED light source may be an LED light source emitting red light. The type of the laser is also not limited, the intensity of the emitted radiation may, however, be chosen to be in a range for safe use by the public and in a range suitable for the image sensor 2 used.

Referring to the embodiment of Fig. 1, the first light source 1 may be realized as an LED light source. The ECU 3 initiates, at least one time, the emission of light 7 by the LED light source 1 for a predetermined duration within the field of view of the front-facing camera 2. This may be achieved via connection 6 which allows the ECU 3 to switch the LED light source to an on state.

In an embodiment, the predetermined duration may be an exposure time of the image sensor 2. For example, the exposure time of a front-facing camera 2 may be in a range of from 1/50s to 1/200s, the predetermined duration may thus also be in a range of from 1/50s to 1/200s. Alternatively, or additionally, the predetermined duration may be chosen according to a response time of the image sensor 2 used and/or any other sensor-specific parameter.

After light emission 7 by the LED light source 1 has been initiated by the ECU 3, the ECU 3 determines a detection result from the image sensor 2. This may be achieved via connection 5.

The term detection result is to be interpreted broadly and may depend on the type of image sensor 2 used. In the embodiment of Fig. 1, the detection result determined by the ECU 3 may be one or more pictures taken by the image sensor 2 being realized as a front-facing camera. The number of pictures taken may depend on the number and type of parameters to be analyzed for determining a status of the camera.

Based on the detection result, the ECU 3 determines a status of the image sensor 2. The status of the image sensor 2 may include one or more of the image sensor 2 working within predefined parameter, the image sensor 2 requiring calibration and the image sensor 2 being out of order.

If the image sensor 2 is realized as a camera, the status of the camera may be determined by the ECU 3 based on one or more pictures taken by said camera. The one or more pictures may be analyzed by the ECU 3 using image processing algorithms. Based on the analysis, the ECU 3 may determine if the one or more pictures show stuck images or if image has an offset in its position as compared to its real position. The image may be the image of the first light source 1, in particular, in an on state. The analysis may further include analyzing brightness, sharpness, contrast and colour reproduction of the image in the one or more pictures. The analysis may be performed on a pixel level.

In response to the determined status of the image sensor 2, the ECU 3 executes a preset task.

In an embodiment, the preset task may include one or more of resuming operation of the image sensor 2, calibrating the image sensor 2 and reporting of the image sensor 2 being out of order.

For example, if the image sensor 2 is determined, as a status, to work within predefined parameters, the ECU 3 may execute the preset task of resuming operation.

If the image sensor 2 is realized as a camera and the ECU 3 determines, for example, that one or more pictures taken by the camera show an image having an offset in its position as compared to its real position, the ECU 3 may execute the preset task of calibrating the image sensor 2, in this case the camera.

If the ECU 3 determines that the image sensor 2 is not working, for example a camera showing stuck images, the ECU 3 may execute the preset task of reporting the image sensor being out of order. This report may be made to a person driving the vehicle, for example, via a (graphical) user interface or via a warning light or sound, or the ECU 3 may be connected to a server and report the image sensor 2 being out of order to that server for processing the report and taking measures for repairing or changing the image sensor 2.

In an embodiment, the ECU 3 may initiate light emission 7 for a predetermined duration in the field of view of the image sensor 2 two or more times. In an embodiment, the emission of light 7 may follow a random pattern, for example, a random on/off sequence of the first light source 1. In other words, the duration of the on period and the duration of the off period of the first light source 1 may be random. If the image sensor 2 is realized as a camera, the ECU 3 may be able to determine if the camera has a delay.

Referring now to the embodiment of Fig. 2, a schematic view of a front end 4 of a vehicle provided with ADAS including a first light source 1, a second light source 8, an image sensor 2 and an ECU 3 is illustrated. While the embodiment of Fig. 2 relates to a system comprising a first light source 1, a second light source 8, an image sensor 2 and an ECU 3, it is noted that the system is not limited to a first and a second light source, but may comprise at least a second light source. The system may comprise three or more light sources attached to the vehicle in the field of view of the image sensor 2. The number of light sources is not limited and may be chosen according the type or use of the image sensor 2. For example, if the field of view of the image sensor 2 used covers a broad area of the vehicle and its environment, three or more light sources may be attached to the vehicle to cover the field of view of the image sensor 2. However, the features applying to the first and the second light source as described herein may apply also to the three or more light sources.

Referring to the embodiment of Fig. 2, the first light source 1 is realized as an LED light source 1 and the image sensor 2 is realized as a front-facing camera. The positioning of the LED light source 1, of the front-facing camera 2 and the ECU 3 is the same as illustrated in the embodiment of Fig. 1. In the following, thus only the differences between the embodiment of Fig.1 and the embodiment of Fig. 2 will be discussed.

In the embodiment of Fig. 2, the second light source 8 is connected to the ECU 3 via connection 10. The connection may be wired and/or wireless and allow the ECU 3 to initiate and control operation of the second light source 8, for example, to switch the second light source 8 on and off and to control as to whether the second light source 8 is working within predefined parameters.

The second light source 8 may be positioned at the front end 4 of the vehicle, for example to the engine cover, at a position different from the first light source 1 in the field of view of the image sensor 2. In particular, the second light source 8 may be attached to a side of the engine cover while the first light source 1 may be attached to the front of the engine cover opposite to the position of the image sensor 2. In this, if the image sensor 2 is a front-facing image sensor, the first light source may cover an angle of 180° with regard to the field of view of the image sensor 2, whilst the second light source may cover an angle different from 180°, between 90°and 180°, in particular 135°.

The type of the at least second light source 8 is not limited. In an embodiment, the at feast second light source 8 may be an LED light source or a laser light source. While also the type and colour of the second LED light source is not limited, the second LED light source 8 may be of a colour different from the first light source 1, if the first light source 1 is an LED light source. The type of the laser is also not limited, the intensity of the emitted radiation, however, may be in a range for safe use with the public and for safe use with the image sensor 2. If the first light source 1 is a laser light source, the first light source 1 and the second light source 8 may be of the same laser light source.

In an embodiment, the first light source 1 and the at least second light source 8 may be attached to the vehicle in a predetermined geometry in the field of view of the image sensor. A predetermined geometry may be realized, for example, by the first light source 1, the at least second light source 8 and the image sensor 2 forming by their respective positions a geometric figure such as an isosceles triangle. The predetermined geometry may be stored in the ECU 3. Based on the predetermined geometry, edge detection of the image sensor 2 may be determined and thus controlled by the ECU 3 and calibration of the image sensor 2 may be executed by the ECU 3 with regard to edge detection if needed.

In an embodiment, the ECU 3 may initiate the emission of light 7 by the first light source 1 and the emission of light 9 by the at least second light source 8 successively for a predetermined duration within the field of view of the image sensor 2 at least one time. In response to each emission of light 7, 9, i.e. by the first light source 1 and the at least second light source 8, the ECU 3 may determine an individual detection result from the image sensor 2. Based on each detection result, i.e. in response to the emission of light 7 by the first light source 1 and in response to the emission of light 9 by the at least second light source 8, the ECU 3 may determine an individual status of the image sensor 2. In response to the determined individual status of the image sensor 2, the ECU 3 may then individually execute a preset task as described above.

In an embodiment, the ECU 3 may initiate the emission of light 7 by the first light source 1 and the emission of light 9 by the at least second light source 8 simultaneously for a predetermined duration within the field of view of the image sensor 2 at least one time. In this case, the detection result obtained from the image sensor 2 includes the response to both light emissions 7, 9 simultaneously.

Referring now to the embodiment of Fig. 3, a process flow of a method for controlling operation of an image sensor of an Advanced Driving Assistance System (ADAS) provided in a vehicle using a first light source attached to said vehicle is illustrated schematically. In step S1, an electronic control unit (ECU) initiates, at least one time, the emission of light from a first light source for a predetermined duration of time within the field of view of an image sensor. Having initiated the emission of light by the first light source in step S1, the ECU then determines in step S2 a detection result from the image sensor in response to the light emitted by the first light source. It is to be noted that the first light source and the image sensor are connected to the ECU. The connection may be wireless and/or wired.

A detection result determined in step S2 may depend on the type of image sensor used. In an embodiment, the image sensor may be a camera including one or more of a front-facing camera and a side-facing fisheye camera. If the image sensor is a camera, the detection result determined in step S2 may be one or more pictures taken by the camera.

In step S3, the ECU then determines a status of the image sensor based on the detection result. In an embodiment, if the image sensor is a camera, the ECU may determine the status of the camera by analyzing the one or more pictures taken by the camera. As the first light source emits light within the field of view of the image sensor, in this case the camera, the first light source may be part of the picture, in particular, in an on state. The analysis may be performed using image processing algorithms. The analysis may be performed on a pixel level.

As a status of the image sensor it may be determined as to whether the image sensor works within predefined parameters or as to whether calibration is required or as to whether the image sensor is out of order.

If the image sensor is determined to operate within predefined parameters, the answer to the question in step S4," image sensor ok?", is YES and the ECU executes in step S5, as a task, resuming operation of the image sensor and the method terminates at step S5.

If the image sensor is determined to not operate within predefined parameters, the answer in step S4 is NO and in step S6 it is then determined as to whether the image sensor is still working. If the answer in step S6 to the question, "image sensor working?", is YES, the ECU executes, as a preset task, in step S8 calibrating the image sensor. After calibration, the method proceeds again to step S1.

If the answer in step S6 is NO, the ECU executes, as a preset task, in step S7 reporting on the image sensor being out of order and the method terminates at step S7.

In an embodiment, additionally at least a second light source may be attached to the vehicle. In this embodiment, the above described method steps may then be performed individually for the first light source and the at least second light source if light emission is initiated by the ECU successively for each of the light sources.

In an embodiment, the ECU may initiate the emission of light by the first light source and the emission of light by the at least second light source simultaneously. In this embodiment, in step S2, determination of the detection result by the ECU may be based on the image sensor obtaining the detection result in response to the simultaneous light emission by the first and the at least second light source, i.e. in one detection step.

In an embodiment, the ECU may initiate the emission of light by the first light source and the at least second light source for two or more times in a random pattern. In this embodiment, in step S2, determination of the detection result by the ECU may be based on the image sensor obtaining, in one detection step, the detection result in response to the random emission of light by the first and the at least second light source and the determination of the status of the image sensor may be based on analyzing the detection result based on the random pattern.

The embodiments of the system and method described herein allow for increasing the automotive safety integrity level (ASIL) of a vehicle provided with an ADAS. Using a first light source and, in some embodiments, at least a second light source, an effective ASIL decomposition can be achieved, with the safety mechanism LED having a higher ASIL and the image sensor having a higher ASIL. Through one or more embodiments, the image sensor may be quickly validated and calibrated, and achieve a higher ASIL than conventional cameras. Moreover, through one or more embodiments, the validation and calibration of the image sensor may be automated and performed in real-time. Additionally or alternatively, the calibration of the image sensor may be performed in response to a detected change in condition, such as by another sensor or system, of the vehicle. For example, if a sensor or a system detects a change in ride height, such as due to a change in weight distribution inside of the vehicle, such as by an occupant moving from a first seat to a second seat, or an active suspension system, one or more embodiments may include validating and/or calibrating the image sensor due to the change in ride height. As such, one or more embodiments, may actively validate and/or calibrate the image sensor. Having such active validation and/or calibration may improve autonomous operation of the vehicle, as well as other advanced driver assistance functionality.

The features described in herein can be relevant to one or more embodiments in any combination. The reference numerals in the claims have merely been introduced to facilitate reading of the claims. They are by no means meant to be limiting.

Throughout this specification various embodiments have been discussed. However, it should be understood that the invention is not limited to any one of these. It is therefore intended that the foregoing detailed description be regarded as illustrative rather than limiting.

## Claims

1. Method for controlling operation of an image sensor (2) of an Advanced Driving Assistance System (ADAS) provided in a vehicle using a first light source (1) attached to said vehicle, the method comprising:
a) initiating (S1), at least one time, by an electronic control unit (ECU) (3), emission of light (7) by the first light source (1) for a predetermined duration within the field of view of the image sensor;
b) determining (S2), by the ECU (3), a detection result from the image sensor (2) obtained in response to the light emitted by the first light source (1);
c) determining (S3), by the ECU (3), a status of the image sensor (2) based on the detection result; and
d) executing (S5, S7, S8), by the ECU (3), a preset task in response to the determined status.

2. Method according to claim 1, wherein the preset task includes one or more of resuming operation of the image sensor (S5), calibrating the image sensor (S8) and reporting on the image sensor being out of order (S7).

3. Method according to claim 1, wherein additionally at least a second light source (8) is attached to the vehicle and wherein step a) comprises: initiating (S1), at least one time, by the ECU (3), emission of light (7, 9) by the first light source (1) and by the at least second light source (8), successively or simultaneously, for a predetermined duration within the field of view of the image sensor (2).

4. Method according to any of claims 1 to 3, wherein in step a) the emission of light (7, 9) is initiated (S1), by the ECU (3), two or more times.

5. Method according to claim 4, wherein in step a) the emission of light (7, 9) is initiated (S1), by the ECU (3), in a random pattern.

6. Method according to any of claims 1 to 5, wherein the image sensor (2) is a camera including one or more of a front-facing camera and a side-facing fisheye camera and wherein in step c) the detection result is one or more pictures taken by said camera.

7. System for controlling operation of an image sensor (2) of an Advanced Driving Assistance System (ADAS) provided in a vehicle using a first light source (1) attached to said vehicle, wherein the system comprises the first light source (1), the image sensor (2) and an electronic control unit (ECU) (3), wherein the ECU (3) is configured to perform a method comprising the following steps:
a) initiating (S1), at least one time, by the ECU (3), emission of light (7) by the first light source (1) for a predetermined duration within the field of view of the image sensor;
b) determining (S2), by the ECU (3), a detection result from the image sensor (2) obtained in response to the light emitted by the first light source (1);
c) determining (S3), by the ECU (3), a status of the image sensor (2) based on the detection result; and
d) executing (S5, S7, S8), by the ECU (3), a preset task in response to the determined status.

8. System according to claim 7, wherein the first light source (1) is attached to a front end (4) of the vehicle in the field of view of the image sensor (2) and the image sensor (2) is a front-facing image sensor.

9. System according to claim 7, wherein the first light source (1) is attached to a side of the vehicle in the field of view of the image sensor (2) and the image sensor (2) is a side-facing image sensor.

10. System according to claim 8 or 9, wherein the system additionally comprises at least a second light source (8).

11. System according to claim 10, wherein the at least second light source (8) is attached to the front end (4) of the vehicle at a position different from the first light source (1) in the field of view of the image sensor (2) and the image sensor (2) is a front-facing image sensor.

12. System according to claim 10, wherein the at least second light source (8) is attached to the side of the vehicle at a position different from the first light source (1) in the field of view of the image sensor (2) and the image sensor (2) is a side-facing image sensor.

13. System according to claim 11 or 12, wherein the first light source (1) and the at least second light source (8) are attached to the vehicle in a predetermined geometry.

14. System accordingto any of claims 7 to 13, wherein the first light source (1) and/or the at least second light source (8) is an LED light source or a laser light source.

15. System according to any of claims 7 to 14, wherein the image sensor (2) is a camera including one or more of a front-facing camera and a side-facing fisheye camera.
